# DEMANDE DE BREVET EUROPEEN

(11) **EP 4 769 972 A1**
(43) Date de publication de la demande: **01.07.2026**
(21) Numéro de dépôt: 25227147.3
(22) Date de dépôt: 24.12.2025
(51) Int. Cl.: H04B 7/185, H04B 7/204

(54) **PROCÉDÉ D'ALLOCATION DYNAMIQUE DE RESSOURCES DE COMMUNICATION TEMPORELLES ET/OU FRÉQUENTIELLES ENTRE UNE PLURALITÉ DE SATELLITES DANS UN RÉSEAU DE COMMUNICATION NON TERRESTRE, ET RÉSEAU DE COMMUNICATION NON TERRESTRE POUR METTRE EN UVRE UN TEL PROCÉDÉ**

(30) Priorité: 24.12.2024 FR 2415239
(71) Demandeur: THALES, 92190 Meudon (FR)
(72) Inventeur: LETURC, Xavier, 92622 GENEVILLIERS (FR); PANAITOPOL, Dorin, 92622 GENNEVILLIERS CEDEX (FR); TONG, Sorya, 92622 GENNEVILLIERS (FR)
(74) Mandataire: Lavoix

(57) **Abrégé**

La présente invention concerne un procédé d'allocation dynamique de ressources de communication temporelles et/ou fréquentielles entre une pluralité de satellites (S1, S2, S3) dans un réseau de communication non terrestre (10),
le procédé comprenant les étapes itératives suivantes, mises en œuvre par chacun des satellites (S1, S2, S3) sur un horizon de créneaux temporels prédéfini :
- réception de données relatives aux équipements utilisateurs contenus dans les sous-zones géographiques (z1-1,...,z1-n1 ; z2-1,...,z2-n2 ; z3-1,...,z3-n3) d'une zone géographique (Z1, Z2, Z3) couverte par ledit satellite ;
- envoi desdites données reçues à au moins un autre satellite ;
- détermination d'une action d'allocation de ressources de communication temporelles et/ou fréquentielles pour chaque satellite (S1, S2, S3), pour ledit horizon de créneaux temporels ;
- application de l'action d'allocation de ressources de communication temporelles et/ou fréquentielles déterminée pour ledit satellite (S1, S2, S3), pour ledit horizon de créneaux temporels.

## Description

**La présente** invention concerne un procédé d'allocation dynamique de ressources de communication temporelles et/ou fréquentielles entre une pluralité de satellites dans un réseau de communication non terrestre. De préférence, le réseau de communication non terrestre est un réseau sans fil, par exemple un réseau cellulaire de type **LTE** (de l'acronyme anglais « Long Term Evolution ») ou 4G, ou 5G, ou 6G, ou un réseau type DVB-S/DVB-S2/DVB-S2X, ou un réseau ad-hoc, sans que cela ne soit limitatif dans le cadre de la présente invention.

La présente invention concerne également un réseau de communication non terrestre associé, configuré pour mettre en œuvre le procédé d'allocation de ressources.

Dans l'état de la technique, il est connu des réseaux de communication non terrestre comprenant plusieurs satellites. De tels satellites peuvent être par exemple géostationnaires, multi-orbitaux ou encore à orbite basse (« low earth orbit » en anglais) appartenant à une même constellation de satellites. Par ailleurs, chaque satellite peut fonctionner selon un mode dit « transparent » dans lequel le satellite agit comme un répéteur (et la station de base se trouve sur le segment sol), ou « régénératif » avec par exemple les couches protocolaires d'une station de base sur le satellite (lui conférant une fonction de capacité régénérative et lui permettant de traiter des paquets de données). Des alternatives d'implémentation avec des modes intermédiaires de fonctionnement avec une division (e.g. un « split » protocolaire) des couches protocolaires entre le satellite et le segment sol sont aussi possibles.

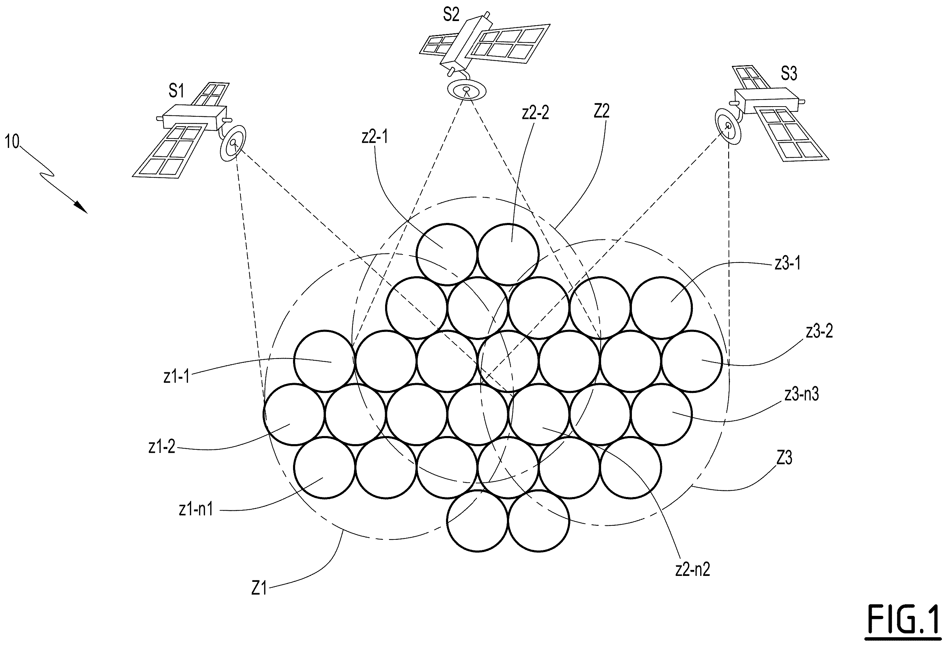

Chaque satellite couvre une zone géographique prédéfinie (typiquement une zone géographique en surface terrestre), chaque zone géographique couverte par un satellite étant subdivisée en sous-zones géographiques de plus petites tailles (appelées « spots » ou « beams » en anglais). Les zones géographiques couvertes par l'ensemble des satellites présentent des zones de recouvrement et des zones de couverture exclusive. Une telle configuration est illustrée schématiquement sur la figure 1, où trois satellites S1, S2, S3 sont représentés, chaque zone géographique couverte par un satellite S1, S2, S3 étant référencée Z1, Z2, Z3 ; les sous-zones géographiques étant référencées z1-1,...,z1-n1 ; z2-1,...,z2-n2 ; z3-1,...,z3-n3 ; où n1, n2, respectivement n3, désigne le nombre de sous-zones géographiques dans la zone géographique Z1, Z2, respectivement Z3. Les zones de recouvrement entre satellites S1, S2, S3 et les zones de couverture exclusive sont clairement visibles sur cette figure 1.

Chacune des sous-zones géographiques d'une zone géographique donnée contient un nombre donné d'équipements utilisateurs, chaque équipement utilisateur étant typiquement un nœud radio destiné à établir une communication avec un des satellites.

Un problème qui se pose est alors de réaliser l'allocation de ressources de communication temporelles et/ou fréquentielles entre les satellites dans le réseau de communication non terrestre. Par « ressources de communication temporelles et/ou fréquentielles » on entend par exemple des blocs de ressources (« Ressource Blocs » en anglais ou RBs) pour une forme d'onde OFDM, DFT-s-OFDM ou autres techniques de multiplexage type CDMA, multiplexage FDMA/TDMA, des symboles, des slots, des sous-trames ou de trames radio, des séquences de repointage de faisceau (appelées séquences de « beam hopping » en anglais), des puissances d'émission (qui peuvent être différentes entre les différents satellites et entre les différentes sous-zones géographiques couvertes par un même satellite, et qui peuvent varier au cours du temps), ou encore des sous-porteuses ou des bandes de fréquence, des canalisations ou des sous-bandes de fréquence associées.

Formellement, une séquence de repointage de faisceau pour un satellite donné correspond à l'attribution, pour chaque créneau individuel d'un horizon temporel donné, d'un ensemble de sous-zones géographiques affectés à ce satellite pendant ce créneau temporel. Or, le problème de l'optimisation d'une séquence de repointage de faisceau est intrinsèquement difficile même en contexte mono-satellite. En effet, si deux sous-zones géographiques adjacentes sont allouées à un même satellite sur une même fréquence porteuse ou sur des fréquences porteuses voisines, des interférences co-canal ou entre canaux adjacents sont alors susceptibles de survenir, dégradant drastiquement les performances du système. Ce problème est encore plus difficile en contexte multi-satellites dans la mesure où il est nécessaire d'établir une collaboration entre les satellites afin de réduire les probabilités de collisions, autrement dit la probabilité d'attribuer la même sous-zone géographique sur la même fréquence ou sur des fréquences voisines à deux satellites ou plus, ce qui engendrerait alors un haut niveau d'interférence.

Plus généralement, le choix de chacune des trois catégories de ressources de communication temporelles et/ou fréquentielles précitées a des impacts sur le choix des autres. En effet, si deux sous-zones géographiques adjacentes allouées lors d'un même créneau temporel, il est alors souhaitable de diminuer la puissance d'émission dans ces sous-zones géographiques, ou bien d'attribuer des fréquences porteuses différentes à ces deux sous-zones géographiques, afin de minimiser le niveau d'interférences reçues.

L'optimisation de l'allocation de ces ressources de communication temporelles et/ou fréquentielles a alors pour objectif d'optimiser les performances du réseau non terrestre en s'adaptant aux conditions de propagation entre les satellites et les équipements utilisateurs au sein de chaque sous-zone géographique, ainsi qu'à la position des équipements utilisateurs et à leur(s) besoin(s) en trafic. Or, le problème d'optimisation résultant est un problème combinatoire très difficile à résoudre par les approches d'optimisation conventionnelles.

Afin de répondre au problème d'optimisation de l'allocation des ressources de communication temporelles et/ou fréquentielles précité, des solutions connues consistent en des approches centralisées ou bien distribuées. Dans les approches centralisées, les différents satellites du réseau de communication non terrestre communiquent leurs informations à un point central (typiquement une passerelle de communication installée au sol). Cette passerelle de communication effectue le calcul de l'allocation des ressources, et transmet l'allocation décidée aux satellites. Dans les approches distribuées au contraire, ce sont les satellites eux-mêmes qui prennent des décisions concernant leur propre allocation de ressources, avec ou sans collaboration avec les autres satellites du réseau. Toutefois, un inconvénient majeur des solutions centralisées est la latence induite par la remontée des informations par chaque satellite vers le point central, puis par la communication de cette allocation aux satellites. Cette latence engendre une moins bonne réactivité du système à des conditions changeantes, par exemple en cas de mobilité importante des équipements utilisateurs au sein des sous-zones géographiques, ou en cas de demande très variable en trafic de la part de ces équipements utilisateurs. En outre, un inconvénient majeur des solutions distribuées est que chaque satellite prend une décision locale pour son allocation de ressource et n'a pas accès à la décision des autres satellites, ce qui peut engendrer par exemple des collisions dans les séquences de repointage de faisceau choisies par les satellites. Ainsi, une phase de convergence est requise avec plusieurs prises de décision successives jusqu'à une bonne configuration (sans pour autant disposer de garanties qu'il n'y aura pas de collisions même une fois la convergence atteinte).

À ce titre d'exemple d'une solution par approche distribuée, le document brevet CN 117856858 A décrit un procédé d'allocation dynamique de ressources de communication temporelles et/ou fréquentielles entre une pluralité de satellites dans un réseau de communication non terrestre. Dans ce procédé, chaque satellite est un agent qui prend une décision concernant sa propre allocation de ressource, sans être en mesure de connaitre la décision prise simultanément par les autres agents (i.e. par les autres satellites). Chaque satellite a accès aux observations des autres satellites pour sa prise de décision. Ainsi, chaque satellite a accès à une observation globale de l'environnement pour sa prise de décision. La prise de décision reste toutefois locale, et donc l'allocation des ressources de communication temporelles et/ou fréquentielles résultante est sujette à des interférences. Chaque satellite est muni d'un système informatique comprenant un réseau de neurones entrainé de manière centralisée. L'entrainement centralisé des réseaux de neurones des satellites combiné à l'utilisation d'un état global lors de l'exécution de l'allocation des ressources ont pour objectif de minimiser le nombre de situations problématiques et d'accélérer la phase de convergence, sans pour autant palier toutes les limitations des approches distribuées. En effet, un inconvénient du procédé d'allocation dynamique de ressources décrit dans ce document brevet réside dans le fait que la prise de décision est réalisée indépendamment par chaque satellite, ce qui peut conduire à des allocations sujettes à des interférences importantes.

La présente invention a pour but de proposer un procédé d'allocation dynamique de ressources de communication temporelles et/ou fréquentielles entre une pluralité de satellites dans un réseau de communication non terrestre, permettant de résoudre le problème d'optimisation de l'allocation des ressources avec une puissance de calcul modérée et des performances au sein du réseau maximisées, tout en palliant les inconvénients des approches centralisées et distribuées conventionnelles. La présente invention a également pour but de proposer un tel procédé qui permette d'allouer toutes sortes de ressources de communication temporelles et/ou fréquentielles. La présente invention a également pour but de proposer un tel procédé qui permette de résoudre le problème des communications requises pour la prise de décision.

À cet effet, l'invention a pour objet un procédé d'allocation dynamique de ressources de communication temporelles et/ou fréquentielles entre une pluralité de satellites dans un réseau de communication non terrestre, chaque satellite couvrant une zone géographique prédéfinie, chaque zone géographique couverte par un satellite étant subdivisée en sous-zones géographiques de plus petites tailles, chacune desdites sous-zones géographiques contenant un nombre donné d'équipements utilisateurs, chaque équipement utilisateur étant destiné à établir une communication avec un satellite, les zones géographiques couvertes par la pluralité de satellites présentant des zones de recouvrement et des zones de couverture exclusive, chaque satellite étant muni d'un système informatique comprenant un réseau de neurones profond entrainé par un apprentissage par renforcement, chaque réseau de neurones profond recevant comme entrées l'ensemble des états des différents satellites du réseau de communication non terrestre à un instant courant, et étant configuré pour fournir en sortie une action d'allocation de ressources de communication temporelles et/ou fréquentielles pour chacun desdits satellites, les réseaux de neurones profonds étant identiques dans l'ensemble des satellites du réseau de communication non terrestre, le procédé comprenant les étapes itératives suivantes, mises en œuvre par chacun des satellites sur un horizon de créneaux temporels prédéfini :
- réception de données relatives aux équipements utilisateurs contenus dans les sous-zones géographiques de la zone géographique couverte par ledit satellite ;
- envoi desdites données reçues à au moins un autre satellite parmi la pluralité de satellites du réseau de communication non terrestre ;
- détermination d'une action d'allocation de ressources de communication temporelles et/ou fréquentielles pour chaque satellite de la pluralité de satellites du réseau de communication non terrestre, pour ledit horizon de créneaux temporels ;
- application de l'action d'allocation de ressources de communication temporelles et/ou fréquentielles déterminée pour ledit satellite, pour ledit horizon de créneaux temporels.

Grâce au fait que chaque satellite dispose d'un réseau de neurones profond entrainé par un apprentissage par renforcement et met en œuvre l'ensemble des étapes du procédé sur un horizon de créneaux temporels, chaque satellite est en mesure de déterminer sa propre action d'allocation de ressources de communication temporelles et/ou fréquentielles, ainsi que les actions des autres satellites, et ce sans que les actions d'allocation déterminées n'engendrent de collisions car les réseaux de neurones profonds sont identiques dans l'ensemble des satellites. Une telle approche permet ainsi de pallier les inconvénients des approches centralisées et distribuées conventionnelles, et peut être qualifiée de semi-distribuée. Une telle approche semi-distribuée permet par conséquent de résoudre le problème d'optimisation de l'allocation des ressources avec une puissance de calcul modérée et des performances au sein du réseau maximisées.

Suivant d'autres aspects avantageux de l'invention, le procédé comprend une ou plusieurs des caractéristiques suivantes, prise(s) isolément ou suivant toutes les combinaisons techniquement possibles :
- chacun des équipements utilisateurs est un nœud radio ;
- lors de l'étape de réception de données, les données relatives aux équipements utilisateurs contenus dans les sous-zones géographiques de la zone géographique couverte par ledit satellite comprennent des données relatives à une position des équipements utilisateurs dans chaque sous-zone géographique et/ou des données relatives à un besoin en communication de la part de chaque équipement utilisateur et/ou des données relatives à une perte par couplage en voie descendante et/ou en voie montante de chaque équipement utilisateur ;

- lors de l'étape de réception de données, les données relatives aux équipements utilisateurs contenus dans les sous-zones géographiques de la zone géographique couverte par ledit satellite comprennent en outre des données relatives à un rapport signal sur interférence et bruit en voie descendante et/ou en voie montante de chaque équipement utilisateur, et/ou des données relatives à la quantité d'énergie restant audit satellite ;
- lors de l'étape d'envoi des données reçues, lorsque les données relatives aux équipements utilisateurs contenus dans les sous-zones géographiques de la zone géographique couverte par ledit satellite comprennent des données relatives à une position des équipements utilisateurs dans chaque sous-zone géographique, lesdites données de position sont envoyées sous la forme d'une fonction de distribution cumulative ou sous la forme d'une fonction de densité de probabilité ;
- lorsque les données relatives aux équipements utilisateurs contenus dans les sous-zones géographiques de la zone géographique couverte par ledit satellite comprennent des données relatives à une position des équipements utilisateurs dans chaque sous-zone géographique, l'étape d'envoi desdites données est effectuée en encodant, pour chacune des sous-zones géographiques, les coordonnées de chaque équipement utilisateur contenu dans ladite sous-zone géographique sur un nombre prédéfini de bits ; ou en subdivisant chaque sous-zone géographique en un ensemble de sous-régions géographiques puis en envoyant, pour chaque sous-région géographique d'une sous-zone géographique donnée, le nombre d'équipements utilisateurs contenus dans ladite sous-région géographique ;
- l'étape d'envoi des données reçues consiste en un envoi, pour chaque sous-zone géographique de la zone géographique couverte par le satellite, d'au moins une fonction de répartition ou d'au moins un histogramme de ces données sur un nombre prédéfini de points et sur un intervalle prédéfini ;
- lorsque les données relatives aux équipements utilisateurs contenus dans les sous-zones géographiques de la zone géographique couverte par ledit satellite comprennent des données relatives à une perte par couplage en voie descendante et/ou en voie montante de chaque équipement utilisateur, l'étape d'envoi desdites données est effectuée en encodant, pour chacune des sous-zones géographiques, la perte par couplage en voie descendante et/ou en voie montante de chaque équipement utilisateur contenu dans ladite sous-zone géographique sur un nombre prédéfini de bits ; ou en effectuant un échantillonnage des valeurs de perte par couplage en voie descendante et/ou en voie montante des équipements utilisateurs contenus dans chaque sous-zone géographique entre une valeur minimale de perte par couplage et une valeur maximale de perte par couplage sur ledit nombre prédéfini de points puis en envoyant, pour chaque sous-zone géographique, lesdites valeurs échantillonnées ;
- lors de l'étape d'envoi des données reçues, lesdites données sont envoyées à tous les autres satellites de la pluralité de satellites du réseau de communication non terrestre dans un mode de diffusion générale ;
- lors de l'étape d'envoi des données reçues, lesdites données sont envoyées à un seul autre satellite de la pluralité de satellites du réseau de communication non terrestre dans un mode de diffusion individuelle ;
- ledit un seul autre satellite est un satellite qui n'a pas déjà reçu des données relatives à des équipements utilisateurs en provenance d'un autre satellite, et l'étape d'envoi des données reçues comprend une sous-étape d'agrégation desdites données reçues à des données en provenance d'un autre satellite et relatives à des équipements utilisateurs couvert(s) par un ou plusieurs autre(s) satellite(s) ;
- chaque réseau de neurones profond est configuré comme un réseau de neurones à ramifications d'actions ;
- chaque branche du réseau de neurones à ramifications d'actions indique, pour un des créneaux temporels de l'horizon et pour une sous-zone géographique donnée, un satellite attribué aux équipements utilisateurs de ladite sous-zone géographique ainsi qu'une puissance d'émission à utiliser et/ou une fréquence porteuse de signal ;
- l'étape de détermination d'une action d'allocation de ressources de communication temporelles et/ou fréquentielles pour chaque satellite de la pluralité de satellites du réseau de communication non terrestre comprend en outre une sous-étape d'application, par le système informatique, d'un masque vectoriel binaire sur tout ou partie des branches du réseau de neurones à ramifications d'actions ;
- le système informatique de chaque satellite comprend en outre un deuxième réseau de neurones profond entrainé par un apprentissage par renforcement, le deuxième réseau de neurones profond étant configuré comme un encodeur, le premier réseau de neurones à ramifications d'actions étant agencé en sortie dudit deuxième réseau de neurones ;
- ledit deuxième réseau de neurones profond présente une propriété d'équivariance par permutation sur ses entrées ;
- chaque réseau de neurones profond est configuré en outre en fonction de conditions météorologiques et/ou atmosphériques distinctes, et/ou en fonction de profils de trafics de communications distincts ;
- l'étape d'envoi des données reçues est effectuée selon un protocole de communication conforme à la norme 4G/5G, les données étant envoyées dans des messages respectant une interface de communication X2/Xn et/ou E-UTRAN/NG-RAN et/ou S1/NG et/ou F1-AP/F1-C et/ou FAPI/nFAPI de ladite norme 4G/5G.

L'invention a également pour objet un réseau de communication non terrestre comprenant une pluralité de satellites, chaque satellite couvrant une zone géographique prédéfinie, chaque zone géographique couverte par un satellite étant subdivisée en sous-zones géographiques de plus petites tailles, chacune desdites sous-zones géographiques contenant un nombre prédéfini d'équipements utilisateurs, chaque équipement utilisateur étant destiné à établir une communication avec un satellite, les zones géographiques couvertes par la pluralité de satellites présentant des zones de recouvrement et des zones de couverture exclusive, chaque satellite étant muni d'un système informatique comprenant un réseau de neurones profond entrainé par un apprentissage par renforcement, chaque réseau de neurones profond recevant comme entrées l'ensemble des états des différents satellites du réseau de communication non terrestre à un instant courant, et étant configuré pour fournir en sortie une action d'allocation de ressources de communication temporelles et/ou fréquentielles pour chacun desdits satellites, les réseaux de neurones profonds étant identiques dans l'ensemble des satellites du réseau de communication non terrestre, dans lequel chacun des satellites est configuré pour mettre en œuvre les étapes du procédé tel que précédemment décrit.

Selon un autre aspect avantageux de l'invention, le système informatique de chaque satellite dispose d'une part d'une capacité de calcul d'une fonction de distribution cumulative et/ou d'une fonction de densité de probabilité, et d'autre part d'une capacité d'estimation de perte par couplage et/ou de rapport signal/interférence plus bruit par équipement utilisateur et/ou par faisceau ou sous-zone géographique.

On entend par « encodeur » un réseau de neurones configuré pour encoder un ensemble de données d'entrée en un autre ensemble de caractéristiques relatives à ces données d'entrée et considérées comme essentielles. Le rôle de l'encodeur est de donner une certaine représentation des données de telle sorte à ce que cette représentation soit adaptée pour un objectif prédéfini.

L'invention apparaîtra plus clairement à la lecture de la description qui va suivre, donnée uniquement à titre d'exemple non limitatif, et faite en référence aux dessins dans lesquels :
- la figure 1 est une vue schématique d'un réseau de communication non terrestre selon un exemple de réalisation de l'invention, le réseau de communication non terrestre comprenant plusieurs satellites ;
- la figure 2 est un organigramme d'un procédé d'allocation dynamique de ressources de communication temporelles et/ou fréquentielles, mis en œuvre par chaque satellite de la figure 1 ;
- la figure 3 est une vue analogue à celle de la figure 1, illustrant une première étape du procédé de la figure 2 ;
- la figure 4 est une vue analogue à celle de la figure 1, illustrant une deuxième étape du procédé de la figure 2 ;
- la figure 5 est une vue analogue à celle de la figure 1, illustrant une troisième étape du procédé de la figure 2 ;
- la figure 6 est un diagramme de séquence représentant un processus de communication mis en œuvre dans le cadre du procédé selon l'invention, la communication étant réalisée entre trois satellites et deux entités, selon un premier exemple de protocole de communication ;
- la figure 7 est un diagramme de séquence représentant un processus de communication mis en œuvre dans le cadre du procédé selon l'invention, la communication étant réalisée entre trois satellites et deux entités, selon un deuxième exemple de protocole de communication ; et
- la figure 8 est un diagramme de séquence représentant un processus de communication mis en œuvre dans le cadre du procédé selon l'invention, la communication étant réalisée entre deux satellites et deux entités, selon un troisième exemple de protocole de communication.

Un réseau de communication non terrestre 10 selon un exemple de réalisation de l'invention est illustré schématiquement sur la figure 1. Le réseau de communication non terrestre 10 est typiquement un réseau sans fil, par exemple un réseau cellulaire de type LTE (de l'acronyme anglais « Long Term Evolution ») ou 4G, ou 5G, ou 6G, ou un réseau type DVB-S/DVB-S2/DVB-S2X, ou un réseau ad-hoc, sans que cela ne soit limitatif dans le cadre de la présente invention. Dans l'exemple de réalisation particulier illustré sur la figure 1, le réseau de communication non terrestre 10 est un réseau multi-utilisateurs. En variante non représentée, le réseau de communication non terrestre 10 est un réseau mono-utilisateur.

Le réseau de communication non terrestre 10 comprend plusieurs satellites S1, S2, S3, par exemple trois satellites S1, S2, S3 dans l'exemple de réalisation particulier illustré sur la figure 1. Le réseau de communication non terrestre 10 comprend également plusieurs équipements utilisateurs, non représentés sur la figure 1 pour des raisons de clarté. Chaque équipement utilisateur est destiné à établir une communication avec un des satellites S1, **S2, S3 et est** typiquement un nœud radio, sans que ce dernier point ne soit limitatif dans le cadre de la présente invention. En variante, chaque équipement utilisateur peut par exemple être un smartphone, un dispositif de communication « mains libres », un objet connecté, ou encore un terminal monté sur un véhicule de type avion ou bateau. Les satellites S1, S2, S3 du réseau de communication non terrestre 10 sont par exemple géostationnaires, multi-orbitaux ou encore à orbite basse (« low earth orbit » en anglais) appartenant à une même constellation de satellites. Par ailleurs, chaque satellite S1, S2, S3 fonctionne selon un mode dit « transparent » dans lequel le satellite S1, S2, S3 agit comme un répéteur (et une station de base individuelle se trouve sur le segment sol), ou « régénératif » avec par exemple les couches protocolaires de la station de base sur le satellite (lui conférant une fonction de capacité régénérative et lui permettant de traiter des paquets de données). Selon un mode de réalisation particulier de l'invention, au moins un des satellites S1, S2, S3 du réseau de communication non terrestre 10 est configuré pour fonctionner selon un mode de communication maître-esclave avec au moins un satellite tiers, ce dernier n'appartenant pas à la constellation des satellites S1, S2, S3 configurés conformément à la présente invention (lequel satellite tiers n'est pas représenté sur la figure 1 pour des raisons de clarté). Dans d'autres alternatives potentielles, le satellite qui est configuré comme un maître implémente par exemple les couches hautes d'une station de base (par exemple L2/L3 ou L3), et le CU (« Central Unit » en anglais) se trouve au sol, et le satellite qui est configuré comme un esclave implémente par exemple les couches basses d'une station de base (par exemple L1 ou L1/L2), où l'unité distribuée DU (« Distributed Unit » en anglais), ou éventuellement l'unité radio RU (« Radio Unit » en anglais) se trouve sur le satellite esclave en question.

Chaque satellite S1, S2, S3 est par exemple composé d'une pile protocolaire dite eNB (pour « enhanced Node B » en anglais, dans le cas d'une station de base conforme à la norme de communication LTE) ou d'une pile protocolaire dite gNB (pour « next generation Node B » en anglais, dans le cas d'une station de base conforme à la norme de communication 5G), ou encore d'une partie d'une pile protocolaire résultant d'une division de la pile protocolaire entre des couches protocolaires basses et des couches protocolaires hautes. La station de base peut être distribuée entre un ou plusieurs satellites S1, S2, S3, ou entre un satellite S1, S2, S3 et le réseau au sol.

Chaque satellite S1, S2, S3 couvre une zone géographique prédéfinie Z1, Z2, Z3 (typiquement une zone géographique en surface terrestre), chaque zone géographique couverte par un satellite étant subdivisée en sous-zones géographiques de plus petites tailles z1-1,...,z1-n1 ; z2-1,...,z2-n2 ; z3-1,...,z3-n3 ; où n1, n2, respectivement n3, désigne le nombre de sous-zones géographiques dans la zone géographique Z1, Z2, respectivement Z3. Comme visible sur la figure 1, les zones géographiques Z1, Z2, Z3 couvertes par l'ensemble des satellites S1, S2, S3 présentent des zones de recouvrement et des zones de couverture exclusive. Chacune des sous-zones géographiques z1-1,...,z1-n1 ; z2-1,...,z2-n2 ; z3-1,...,z3-n3 contient un nombre donné d'équipements utilisateurs (ce nombre d'équipements utilisateurs pouvant être différente d'une sous-zone géographique à une autre). Chacun des satellites S1, S2, S3 est configuré soit pour communiquer avec tous les autres satellites S1, S2, S3 du réseau 10 selon un mode de diffusion générale (mode de diffusion appelé « broadcast » en anglais) ; soit avec un seul autre satellite S1, S2, S3 du réseau 10 selon un mode de diffusion individuelle (mode de diffusion appelé « unicast » en anglais). Dans ce dernier cas de figure, chacun des satellites S1, S2, S3 est par exemple équipé d'une antenne directive.

Chaque satellite S1, S2, S3 est muni d'un système informatique, ce dernier n'étant pas représenté sur la figure 1 pour des raisons de clarté. Le système informatique de chaque satellite S1, S2, S3 comprend un réseau de neurones profond (non visible sur la figure 1) qui est entrainé au préalable par un apprentissage par renforcement. Les réseaux de neurones profonds sont identiques dans l'ensemble des satellites S1, S2, S3 du réseau de communication non terrestre 10. On entend par « apprentissage par renforcement de réseaux de neurones profonds » un sous-domaine de l'apprentissage automatique (« machine learning » en anglais) qui consiste à réaliser un apprentissage par renforcement à une architecture de réseaux de neurones profonds (« deep reinforcement learning » en anglais). L'apprentissage par renforcement permet de s'approcher d'une politique optimale dans le cadre de processus de décision Markovien.

Chaque réseau de neurones profond reçoit comme entrées l'ensemble des états des différents satellites S1, S2, S3 du réseau de communication non terrestre 10 à un instant courant, et est configuré pour fournir en sortie une action d'allocation de ressources de communication temporelles et/ou fréquentielles pour chacun des satellites S1, S2, S3. Selon un exemple de réalisation particulier, chaque réseau de neurones profond est configuré comme un réseau de neurones à ramifications d'actions, comme cela sera détaillé par la suite. De préférence, selon cet exemple de réalisation particulier, le système informatique de chaque satellite S1, S2, S3 est configuré pour appliquer un masque vectoriel binaire sur tout ou partie des branches du réseau de neurones à ramifications d'actions qui est stocké dans ce système informatique. Le masque vectoriel binaire est choisi de telle sorte qu'une probabilité nulle est attribuée à une sortie du réseau de neurones profond lorsque cette sortie correspond à une action invalide prédéterminée. L'utilisation d'un tel masque vectoriel binaire permet d'assurer une protection minimale (vis-à-vis des risques d'interférences) entre des sous-zones géographiques adjacentes z1-1,...,z1-n1 ; z2-1,...,z2-n2 ; z3-1,...,z3-n3, ainsi que de garantir le respect de contraintes souhaitées, par exemple une puissance d'émission maximale et/ou un écartement minimal entre deux sous-zones géographiques servies sur une même fréquence porteuse.

Selon un mode de réalisation préférentiel de l'invention, le système informatique de chaque satellite S1, S2, S3 comprend en outre un deuxième réseau de neurones profond (non visible sur la figure 1) qui est entrainé au préalable par un apprentissage par renforcement. Chaque deuxième réseau de neurones profond d'un satellite S1, S2, S3 est configuré comme un encodeur et est agencé en entrée du premier réseau de neurones profond à ramification d'actions (décrit précédemment) qui est stocké dans le système informatique de ce satellite S1, S2, S3. De préférence, chaque deuxième réseau de neurones profond présente une propriété d'équivariance par permutation sur ses entrées. On entend par « propriété d'équivariance par permutation » le fait que, pour toute permutation sur les entrées du deuxième réseau de neurones, le résultat de sortie de ce deuxième réseau de neurones subit la même permutation. Une telle propriété d'équivariance par permutation permet avantageusement d'accélérer l'entraînement des réseaux de neurones profonds ainsi que d'améliorer la capacité de généralisation du procédé d'allocation dynamique selon l'invention. De préférence encore, et de manière non limitative dans le cadre de la présente invention, chaque deuxième réseau de neurones profond est un réseau de neurones transformeur de type encodeur uniquement (aussi appelé « Encoder Only Transformer » en anglais), sans codage positionnel. Par « réseau de neurones de type transformeur sans codage positionnel » on entend tout réseau de neurones élaboré selon un modèle auto-attentif qui peut prendre un nombre arbitraire de liens, possède la propriété d'équivariance par permutation et est muni d'un mécanisme d'attention.

Chacun des premier et deuxième réseaux de neurones est un réseau de neurones profond entrainé par un apprentissage par renforcement qui comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Le premier réseau de neurones est typiquement un encodeur, de préférence un réseau de neurones transformeur de type encodeur uniquement (aussi appelé « Encoder Only Transformer » en anglais).

De préférence, chaque premier et/ou deuxième réseau de neurones profond est configuré en fonction de conditions météorologiques et/ou atmosphériques distinctes (telles que par exemple « bonnes », « dégradées » et « très dégradées »), et/ou en fonction de profils de trafics de communications distincts (tels que par exemple « matin », « après-midi » et « nuit »). Ceci permet de réduire le domaine de variabilité des réseaux de neurones, en ayant des réseaux de neurones « spécialisés » avec de meilleures performances dans chaque régime considéré. En effet, il est connu que plus le domaine de variabilité des entrées d'un réseau de neurones est grand et plus l'apprentissage et la généralisation seront délicats. Il est également connu que le besoin en communications des équipements utilisateurs est variable et dépend en particulier du moment dans la journée. Ainsi, en configurant chaque premier et/ou deuxième réseau de neurones profond de la sorte, l'entraînement des réseaux de neurones est avantageusement facilité et la capacité de généralisation du procédé d'allocation dynamique selon l'invention est améliorée.

Concernant l'entrainement des réseaux de neurones profonds, ce dernier peut par exemple être effectué hors ligne, soit sur des données issues de simulations, soit sur des bases de données collectées par l'entremise de constellations de satellites déjà déployées. Chaque réseau de neurones est typiquement entrainé à l'aide d'un algorithme d'apprentissage profond par renforcement tel que par exemple l'algorithme « soft actor critic ».

Le déroulement de l'entrainement est le suivant. L'algorithme décide d'une allocation de ressources de communication temporelles et/ou fréquentielles pour la durée d'un horizon d'allocation. Des métriques de performances sont mesurées à la fin de cet horizon (par exemple une métrique indiquant le nombre total d'équipements utilisateurs dont les besoins en communications ont été correctement satisfaits, ou bien un pourcentage de satisfaction de chaque équipement utilisateur). Sur la base de cette récompense, l'algorithme d'entrainement améliore le réseau de neurones jusqu'à atteindre la convergence.

Les ressources de communication temporelles et/ou fréquentielles peuvent par exemple correspondre à des séquences de repointage de faisceau, et/ou à des puissances d'émission (qui peuvent être différentes entre les différents satellites S1, S2, S3 et entre les différentes sous-zones géographiques z1-1,...,z1-n1 ; z2-1,...,z2-n2 ; z3-1,...,z3-n3 couvertes par un même satellite S1, S2, S3, et qui peuvent varier au cours du temps), et/ou à des fréquences porteuses (allouées par satellite S1, S2, S3 et/ou par sous-zone géographique z1-1,...,z1-n1 ; z2-1,...,z2-n2 ; z3-1,...,z3-n3).

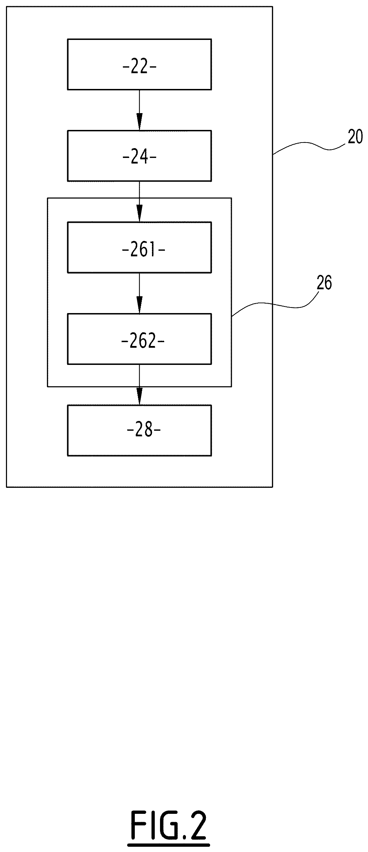

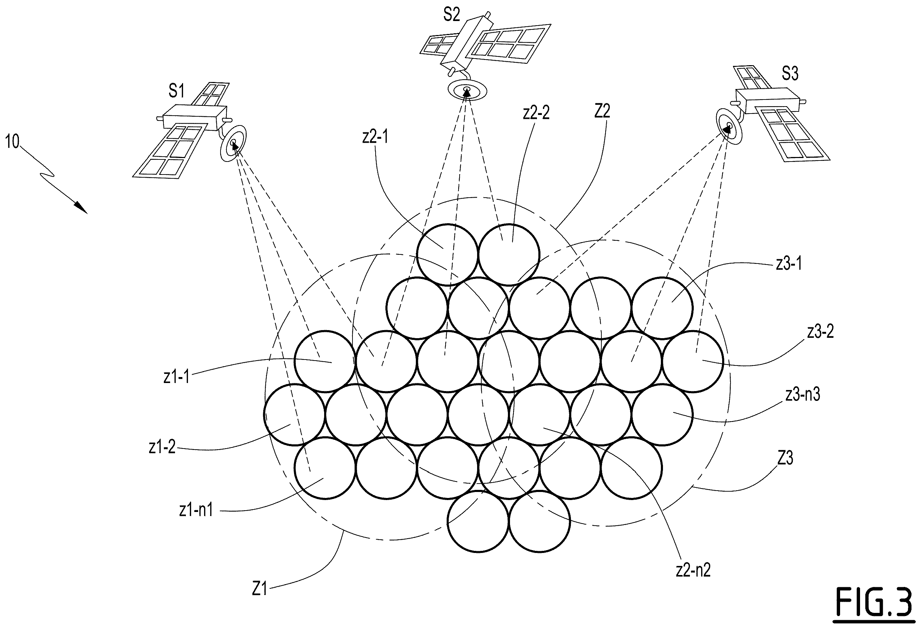

Le procédé d'allocation dynamique de ressources de communication temporelles et/ou fréquentielles entre les satellites S1, S2, S3 dans le réseau de communication non terrestre 10, mis en œuvre par chacun des satellites S1, S2, S3, sera désormais expliqué en référence à la figure 2 présentant un organigramme de ses étapes ainsi qu'en référence aux figures 3 à 5. On suppose pour la suite que le temps est divisé en créneaux temporels d'une même durée prédéfinie, et que l'allocation de ressources communication temporelles et/ou fréquentielles est réalisée sur un horizon prédéfini de k1 créneaux temporels. Le choix du facteur k1 résulte d'un compromis : une petite valeur de k1 permet une plus grande réactivité du système à des conditions différentes en termes de position des satellites S1, S2, S3, des équipements utilisateurs, etc. mais engendre également une plus grande récurrence dans les besoins d'échanges d'informations entre les satellites S1, S2, S3.

Le procédé comprend une phase itérative 20 exécutée par chacun des satellites S1, S2, S3, pour chaque horizon de k1 créneaux temporels. Par la suite, pour des raisons de clarté, seules les étapes effectuées par le satellite S1 seront détaillées, en sachant que les autres satellites S2, S3 mettent en œuvre les mêmes étapes de façon analogue et simultanée.

Lors d'une étape initiale 22 (illustrée sur la figure 3) de la phase itérative 20, le satellite S1 reçoit des données relatives aux équipements utilisateurs contenus dans les sous-zones géographiques z1-1,...,z1-n1 de la zone géographique Z1 qu'il couvre. Selon un mode de réalisation particulier de l'invention, de telles données comprennent au moins des données relatives à une position des équipements utilisateurs dans chaque sous-zone géographique z1-1,...,z1-n1 et/ou des données relatives à un besoin en communication de la part de chaque équipement utilisateur et/ou des données relatives à une perte par couplage en voie descendante et/ou en voie montante (« coupling loss » en anglais) de chaque équipement utilisateur. De préférence, selon ce même mode de réalisation particulier, de telles données comprennent en outre des données relatives à un rapport signal sur interférence et bruit (« Signal to Interference plus Noise Ratio » en anglais) en voie descendante et/ou en voie montante de chaque équipement utilisateur, et/ou des données relatives à la quantité d'énergie restant au satellite S1. La connaissance par le satellite S1 de la position des équipements utilisateurs est importante dans la mesure où un équipement utilisateur donné ne subira pas la même interférence provenant d'une sous-zone géographique adjacente en fonction de sa position dans sa propre sous-zone géographique. Le besoin en communications est essentiel dans la planification de séquences de repointage de faisceau (il sera nécessaire de servir plus souvent une sous-zone géographique dont les équipements utilisateurs ont de forts besoins en communications). La connaissance de la perte par couplage et/ou du rapport signal sur interférence et bruit est également importante afin de déterminer le niveau d'interférence qu'un équipement utilisateur peut tolérer, et ainsi adapter au mieux la puissance d'émission ainsi que les séquences de repointage de faisceau. Lorsque les données relatives aux équipements utilisateurs comprennent des données relatives à un besoin en communication de la part de chaque équipement utilisateur, ces dernières peuvent par exemple s'appuyer sur des informations telles que des requêtes d'ordonnancement (« Scheduling Request » en anglais), ou encore des rapports d'état de tampon (« Buffer Status Report » en anglais). La connaissance par le satellite S1 de la quantité d'énergie qu'il lui reste est également importante dans la mesure où elle permet de savoir le nombre de sous-zones géographiques z1-1,...,z1-n1 qu'il peut effectivement servir.

A l'issue de cette étape initiale 22, le satellite S1 est en mesure de déterminer le nombre d'équipements utilisateurs contenus dans chaque sous-zone géographique z1-1,...,z1-n1 de la zone Z1 qu'il couvre.

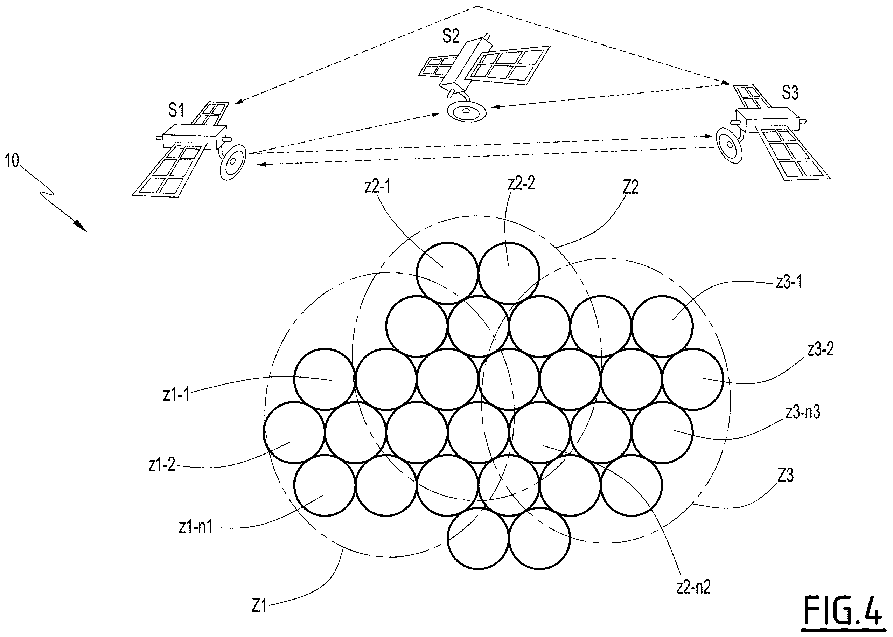

Lors d'une étape suivante 24 (illustrée sur la figure 4) de la phase itérative 20, le satellite S1 envoie les données reçues au cours de l'étape précédente 22 à au moins un autre satellite S2, S3. Dans l'exemple de réalisation illustré sur la figure 4, le satellite S1 envoie les données reçues au cours de l'étape précédente 22 à chacun des autres satellites S2, S3, selon un mode de diffusion générale. En variante non représentée, le satellite S1 envoie les données reçues au cours de l'étape précédente 22 à un des autres satellites, par exemple le satellite S2, selon un mode de diffusion individuelle. Le satellite S2 envoie quant à lui au satellite S3 l'agrégation composée des données reçues de la part du satellite S1 et de ses propres données collectées au cours de l'étape précédente 22, et le satellite S3 envoie au satellite S1 l'agrégation composée des données reçues de la part du satellite S2 (amputées des données relatives au satellite S1) et de ses propres données collectées au cours de l'étape précédente 22. Pour finir, toujours au cours de cette étape 24, le satellite S1 envoie au satellite S2 les données collectées par le satellite S3 au cours de l'étape précédente 22. Un tel protocole de communication permet ainsi de réduire avantageusement le nombre de communications inter-satellites nécessaires (à un nombre de 2.N1-2 communications, où N1 est le nombre de satellites du réseau 10, en l'occurrence trois satellites dans l'exemple de réalisation particulier des figures 1 à 5), et donc le temps de latence associé.

Au cours de cette étape 24, lorsque les données relatives aux équipements utilisateurs contenus dans les sous-zones géographiques z1-1,...,z1-n1 comprennent des données relatives à une position des équipements utilisateurs dans chaque sous-zone géographique z1-1,...,z1-n1, les données de position sont de préférence envoyées par le satellite S1 sous la forme d'une fonction de distribution cumulative ou sous la forme d'une fonction de densité de probabilité. Plus précisément, selon ce cas d'usage, l'étape 24 d'envoi des données de position est effectuée en encodant, pour chacune des sous-zones géographiques z1-1,...,z1-n1, les coordonnées de chaque équipement utilisateur contenu dans la sous-zone géographique z1-1,...,z1-n1 en question sur un nombre prédéfini de bits ; ou en subdivisant chaque sous-zone géographique z1-1,...,z1-n1 en un ensemble de sous-régions géographiques (non représentées sur les figures pour des raisons de clarté) puis en envoyant, pour chaque sous-région géographique d'une sous-zone géographique z1-1,...,z1-n1 donnée, le nombre d'équipements utilisateurs contenus dans cette sous-région géographique. Avantageusement, le satellite S1 calcule le nombre de bits nécessaire pour chacune des deux procédures de transmission de données précitées (encodage ou subdivision), puis, en fonction du nombre de bits calculés, sélectionne la procédure qui requiert le moins de bits. Ce calcul peut être réeffectué à chaque nouvelle itération de la phase 20, permettant ainsi de pouvoir basculer dynamiquement entre les deux procédures afin de chercher en permanence à minimiser la quantité de signalisation requise. En effet, la quantité de signalisation à échanger entre les satellites S1, S2, S3 est potentiellement élevée (notamment dans le cas où de nombreux équipements utilisateurs sont présents dans les sous-zones géographiques), ce qui justifie de chercher à minimiser la quantité de données transmises. Il est à noter qu'un bit additionnel peut être ajouté lors de la transmission afin d'indiquer au satellite récepteur quelle procédure de transmission a été utilisée. Une telle fonction de distribution cumulative ou de densité de probabilité permet d'indiquer des informations statistiques concernant le comportement des utilisateurs à l'intérieur des sous-zones géographiques z1-1,...,z1-n1.

Au cours de cette même étape 24, les données sont de préférence envoyées par le satellite S1, pour chaque sous-zone géographique z1-1,...,z1-n1 de la zone géographique Z1, sous la forme d'au moins une fonction de répartition ou d'au moins un histogramme de ces données sur un nombre prédéfini de points et sur un intervalle prédéfini, ceci notamment lorsque les données comprennent des données relatives à un besoin en communication de la part de chaque équipement utilisateur et/ou des données relatives à une perte par couplage en voie descendante et/ou en voie montante de chaque équipement utilisateur. Plus précisément, lorsque les données relatives aux équipements utilisateurs contenus dans les sous-zones géographiques z1-1,...,z1-n1 comprennent des données relatives à une perte par couplage en voie descendante et/ou en voie montante de chaque équipement utilisateur, l'étape 24 d'envoi des données de perte par couplage est effectuée en encodant, pour chacune des sous-zones géographiques z1-1,...,z1-n1, la perte par couplage en voie descendante et/ou en voie montante de chaque équipement utilisateur contenu dans la sous-zone géographique z1-1,...,z1-n1 en question sur un nombre prédéfini de bits ; ou en effectuant un échantillonnage des valeurs de perte par couplage en voie descendante et/ou en voie montante des équipements utilisateurs contenus dans chaque sous-zone géographique z1-1,...,z1-n1 entre une valeur minimale de perte par couplage et une valeur maximale de perte par couplage sur un nombre prédéfini de points puis en envoyant, pour chaque sous-zone géographique z1-1,...,z1-n1, les valeurs échantillonnées. L'échantillonnage peut être effectué de manière régulière ou irrégulière. Avantageusement, le satellite S1 calcule le nombre de bits nécessaire pour chacune des deux procédures de transmission de données précitées (encodage ou échantillonnage), puis, en fonction du nombre de bits calculés, sélectionne la procédure qui requiert le moins de bits. Ce calcul peut être réeffectué à chaque nouvelle itération de la phase 20, permettant ainsi de pouvoir basculer dynamiquement entre les deux procédures afin de chercher en permanence à minimiser la quantité de signalisation requise. Il est à noter qu'un bit additionnel peut être ajouté lors de la transmission afin d'indiquer au satellite récepteur quelle procédure de transmission a été utilisée.

Selon un mode de réalisation préférentiel de l'invention, cette étape 24 d'envoi des données reçues est effectuée selon un protocole de communication conforme à la norme 4G/5G, les données étant envoyées dans des messages respectant une interface de communication X2/Xn et/ou et/ou E-UTRAN/NG-RAN et/ou S1/NG et/ou F1-AP/F1-C (pour la norme 3GPP 4G/5G) et/ou FAPI/nFAPI (pour la norme non 3GPP 4G/5G). Dans le cas de la norme 4G ou 5G, chaque réseau de neurones profond peut être entrainé dans une ou plusieurs entité(s) appelée(s) CMNF/LMF/e-SMLC (de l'anglais « Coverage Management Network Function » pour CMNF et « Location Management Function » pour LMF en 5G, et « enhanced Serving Mobile Location Center» pour e-SMLC en 4G), qui connait les constellations et est capable de déterminer les positions des satellites à différents instants. Ainsi, cette ou ces entité(s) CMNF/LMF/e-SMLC effectue(nt) une pluralité d'entrainements, correspondant à toutes les configurations possibles concernant les couvertures au sol des différents satellites. Lorsque l'étape d'envoi 24 est effectuée selon un protocole de communication conforme à la norme 4G/5G, les données étant envoyées dans des messages respectant une interface de communication X2/Xn de la norme 4G/5G, les satellites S1, S2, S3 échangent des informations concernant leurs sous-zones géographiques respectives z1-1,...,z1-n1 ; z2-1,...,z2-n2 ; z3-1,...,z3-n3, via des messages Xn/X2. Les satellites S1, S2, S3 effectuent par exemple une requête à une entité appelée AMF/MME (de l'anglais « Access and Mobility Management Function » en 5G, ou « Mobility Management Entity » en LTE) afin qu'elle leur communique les poids du réseau de neurones entrainé. L'entité AMF/MME effectue alors une requête à l'entité CMNF/LMF/e-SMLC concernant les poids. On suppose pour cela que l'entité CMNF/LMF/e-SMLC est en mesure de déterminer à chaque instant la position des satellites, et donc peut déterminer les poids adéquats. Lorsque les données transmises par les satellites S1, S2, S3 le sont sous la forme d'une fonction de distribution cumulative (CDF ou « Cumulative Distributed Function ») ou sous la forme d'une fonction de densité de probabilité (PDF ou « Probability Density Function »), une telle fonction transmise est par exemple définie sur un nombre de points prédéfini (tout n'est pas transmis, l'entité CMNF/LMF/e-SMLC étant configurée pour interpoler les points manquants afin de retrouver la courbe exacte). Le système informatique de chaque satellite S1, S2, S3 dispose d'une part d'une capacité de calcul d'une fonction de distribution cumulative et/ou d'une fonction de densité de probabilité, et d'autre part d'une capacité d'estimation de perte par couplage et/ou de rapport signal/interférence plus bruit par équipement utilisateur et/ou par faisceau ou sous-zone géographique z1-1,...,z1-n1 ; z2-1,...,z2-n2 ; z3-1,...,z3-n3. En outre, le nombre de points prédéfini peut être indiqué dans la requête adressée par les satellites S1, S2, S3 à l'entité AMF/MME. Les messages Xn/X2 entre deux satellites peuvent être des messages de type REQUEST (par exemple contenant des requêtes ou interrogations sur des informations telles que le nombre d'équipements utilisateurs et/ou une fonction de distribution cumulative en tant que fonction d'une perte par couplage, et/ou une fonction de distribution cumulative en tant que fonction d'un rapport signal/interférence plus bruit, et/ou une fonction de distribution cumulative en tant que fonction d'un rapport d'état de tampon BSR (« Buffer Status Report » en anglais), et/ou une fonction de distribution cumulative en tant que fonction d'une demande de planification SR (« Scheduling Request » en anglais), et/ou une fonction de densité de probabilité par faisceau ou sous-zone géographique , en voie descendante et/ou en voie montante, pour le satellite Sx) ou des messages de type RESPONSE (par exemple contenant les valeurs pour des paramètres tels que le nombre d'équipements utilisateurs et/ou une fonction de distribution cumulative en tant que fonction d'une perte par couplage, et/ou une fonction de distribution cumulative en tant que fonction d'un rapport signal/interférence plus bruit, et/ou une fonction de distribution cumulative en tant que fonction d'un rapport d'état de tampon BSR, et/ou une fonction de distribution cumulative en tant que fonction d'une demande de planification SR, et/ou une fonction de densité de probabilité par faisceau ou sous-zone géographique , en voie descendante et/ou en voie montante, pour le satellite Sx).

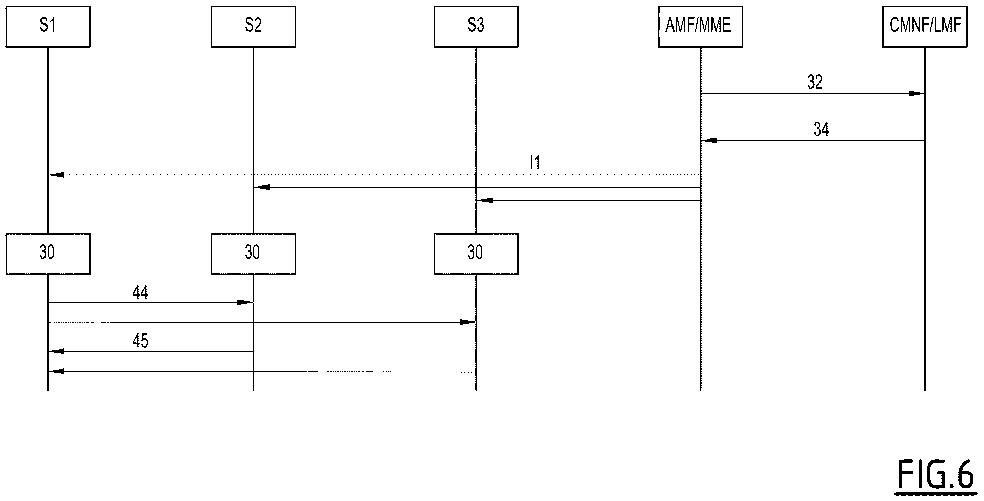

Dans une première alternative potentielle illustrée sur la figure 6, l'interface NG-RAN/E-UTRAN NG/S1, référencée I1, peut transporter/aider au transfert entre les satellites S1, S2, S3 d'une part et l'entité AMF/MME d'autre part d'un modèle neuronal 30 (qui correspond à la concaténation des premier et deuxième réseaux de neurones profonds) entrainé au sol sur une des entités externes ou internes au réseau cœur. Dans cet exemple, l'entité AMF/MME interroge l'entité CMNF/LMF/e-SMLC dans un message 32 de type REQUEST pour une demande d'information de type, par exemple, un transfert d'un modèle neuronal 30 entrainé au sol sur une des entités externes ou internes au réseau cœur, et reçoit une réponse dans un message 34 de type RESPONSE avec les valeurs correspondantes pour le modèle neuronal 30 entrainé au sol sur une des entités externes ou internes au réseau cœur. Potentiellement, à la suite de la réception d'un message de type REQUEST 44 (par exemple contenant des requêtes ou interrogations sur des informations) e.g. entre les satellites S1 et S2 et/ou S1 et S3, les satellites S2 et S3 répondent avec un message RESPONSE 45 (par exemple contenant les valeurs pour des paramètres) au satellite S1 et le satellite S1 applique la configuration calculée en utilisant le modèle neuronal 30.

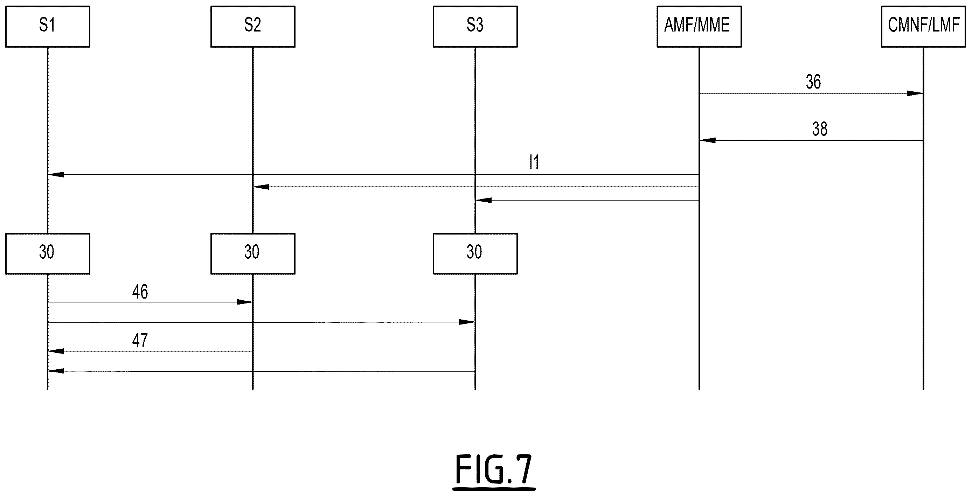

Dans une deuxième alternative potentielle illustrée sur la figure 7, l'interface NG-RAN/E-UTRAN NG/S1, référencée I1, peut transporter/aider au transfert entre les satellites S1, S2, S3 d'une part et l'entité AMF/MME d'autre part des informations de type, par exemple, une position GNSS satellite/éphémérides satellite/couverture satellite/contrainte énergétique satellite calculées sur une des entités externes ou internes au réseau cœur. Dans cet exemple, l'entité AMF/MME interroge l'entité CMNF/LMF/e-SMLC dans un message 36 de type REQUEST pour une demande d'information de type, par exemple, une position GNSS satellite/éphémérides satellite/couverture satellite/contrainte énergétique satellite et reçoit une réponse dans un message 38 de type RESPONSE avec les valeurs correspondantes pour une position GNSS satellite/éphémérides satellite/couverture satellite/contrainte énergétique satellite des satellites S1, S2. Potentiellement, à la suite de la réception d'un message de type REQUEST 46 (par exemple contenant des requêtes ou interrogations sur des informations telles que le nombre d'équipements utilisateurs et/ou une fonction de distribution cumulative en tant que fonction d'une perte par couplage, et/ou une fonction de distribution cumulative en tant que fonction d'un rapport signal/interférence plus bruit, et/ou une fonction de distribution cumulative en tant que fonction d'un rapport d'état de tampon BSR (« Buffer Status Report » en anglais), et/ou une fonction de distribution cumulative en tant que fonction d'une demande de planification/scheduling type SR (« Scheduling Request » en anglais), et/ou une fonction de densité de probabilité par faisceau ou sous-zone géographique, en voie descendante et/ou en voie montante) e.g. entre les satellites S1 et S2, S1 et S3, les satellites S2 et S3 répondent avec un message RESPONSE 47 (par exemple contenant les valeurs pour des paramètres tels que le nombre d'équipements utilisateurs et/ou une fonction de distribution cumulative en tant que fonction d'une perte par couplage, et/ou une fonction de distribution cumulative en tant que fonction d'un rapport signal/interférence plus bruit, et/ou une fonction de distribution cumulative en tant que fonction d'un rapport d'état de tampon BSR, et/ou une fonction de distribution cumulative en tant que fonction d'une demande de planification SR, et/ou une fonction de densité de probabilité par faisceau ou sous-zone géographique, en voie descendante et/ou en voie montante) au satellite S1 et le satellite S1 applique la configuration calculée en utilisant le modèle neuronal 30.

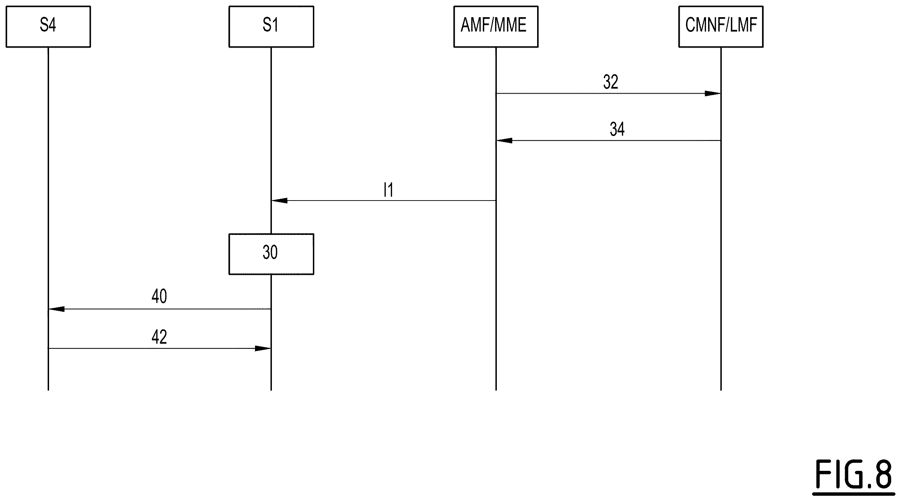

Dans une troisième alternative potentielle illustrée sur la figure 8, à la place d'un message de type REQUEST/RESPONSE, un des satellites, par exemple le satellite S1 (qui implémente dans cet exemple une fonction de maître) peut directement configurer (grâce à une interface de type e.g. Xn/X2, F1-AP, F1-C, FAPI, nFAPI ou similaire) un satellite tiers S4 (qui implémente dans cet exemple une fonction d'esclave) pour le repointage de faisceau du satellite tiers S4 et/ou l'unité distribuée DU ou l'unité radio RU du satellite tiers S4 avec l'allocation de ressources/la puissance nécessaire par faisceau. A la suite de la réception du message de configuration 40, le satellite tiers S4 applique la configuration envoyée par le satellite S1 et répond avec un message de confirmation de la configuration 42.

D'une manière générale, une fois qu'un des satellites S1, S2, S3 applique le modèle neuronal 30, ce satellite S1, S2, S3 peut déterminer la configuration pour tous les autres satellites S1, S2, S3 du réseau de communication non terrestre 10 en liaison montante et liaison descendante et par rapport à, par exemple, la puissance appliquée par faisceau, la bande de fréquence, l'allocation de ressources par faisceau pour chaque satellite S1, S2, S3. En fonction du résultat, le satellite S1, S2, S3 configure la procédure de repointage de faisceau ainsi que la stratégie d'allocation de ressources en fonction du modèle neuronal 30 entrainé par l'entité CMNF/LMF/e-SMLC.

A l'issue de cette étape 24, le satellite S1 dispose d'une perception (commune aux autres satellites S2, S3) de l'environnement relatif à l'ensemble des satellites S1, S2, S3 du réseau de communication non terrestre 10. Autrement dit, à l'issue de l'étape 24, le satellite S1 (ainsi que chacun des autres satellites S2, S3) connait les états respectifs de tous les satellites S1, S2, S3.

Lors d'une étape suivante 26 de la phase itérative 20, le système informatique du satellite S1 détermine, pour chacun des satellites S1, S2, S3, une action d'allocation de ressources de communication temporelles et/ou fréquentielles pour ce satellite S1, S2, S3, pour l'horizon courant de k1 créneaux temporels. On suppose que le système informatique du satellite S1 dispose d'une version encodée de son état perçu, afin que chaque satellite S1, S2, S3 dispose d'un espace d'états absolument identique. Au cours de cette étape 26, le satellite S1 fournit, en entrée du réseau de neurones stocké dans son système informatique, l'agrégation des états de l'ensemble des satellites S1, S2, S3, plus précisément d'une version encodée de ces états le cas échéant. Le réseau de neurones fournit alors en sortie une action d'allocation de ressources de communication temporelles et/ou fréquentielles pour le satellite S1, ainsi que pour chacun des autres satellites S2, S3, pour l'horizon courant de k1 créneaux temporels. De préférence, lorsque le réseau de neurones est un réseau de neurones à ramifications d'actions, chaque branche du réseau de neurones à ramifications d'actions indique, pour un des k1 créneaux temporels de l'horizon et pour une sous-zone géographique donnée z1-1,...,z1-n1 ; z2-1,...,z2-n2 ; z3-1,...,z3-n3, un satellite S1, S2, S3 attribué aux équipements utilisateurs de cette sous-zone géographique z1-1,...,z1-n1 ; z2-1,...,z2-n2 ; z3-1,...,z3-n3 ainsi qu'une puissance d'émission à utiliser et/ou une fréquence porteuse de signal. Ceci permet de garantir qu'une sous-zone géographique donnée z1-1,...,z1-n1 ; z2-1,...,z2-n2 ; z3-1,...,z3-n3 soit allouée à un unique satellite S1, S2, S3. Une telle architecture par « ramifications d'actions » (« action branching » en anglais) consiste à diviser le choix d'une action combinatoire de très grande dimension en choix de sous-actions de plus petites dimensions. Différentes possibilités peuvent être envisagées pour la division de l'action globale en sous-actions. Selon un exemple de réalisation particulier de l'invention, k1.N2 branches sont formées pour le réseau de neurones, où N2 est le nombre total de sous-zones géographiques z1-1,...,z1-n1 ; z2-1,...,z2-n2 ; z3-1,...,z3-n3. Ainsi, la dimension de l'espace d'actions de chaque branche est de N3.N4 (où N3 est le nombre de valeurs discrètes que peut prendre la puissance d'émission de chaque sous-zone géographique et N4 est le nombre de fréquences porteuses différentes), ce qui permet de réduire avantageusement la dimension de l'espace d'actions total. En outre, cette procédure permet de gérer naturellement les collisions puisque de par la conception de l'architecture, une sous-zone géographique donnée z1-1,...,z1-n1 ; z2-1,...,z2-n2 ; z3-1,...,z3-n3 est associée à un unique satellite S1, S2, S3.

De préférence, cette étape de détermination 26 comprend une sous-étape 262 d'application, par le système informatique, d'un masque vectoriel binaire sur tout ou partie des branches du réseau de neurones à ramifications d'actions. Pour ce faire, l'étape de détermination 26 comprend également une sous-étape intermédiaire 261 de vectorisation des sorties du réseau de neurones. L'application d'un masque vectoriel binaire consiste à interdire certaines actions sur une branche donnée du réseau de neurones à ramifications d'actions. Ainsi, le masque vectoriel binaire sur la i-ème branche correspond aux actions invalides pour le choix relatif à la i-ème ressource de communication temporelle et/ou fréquentielle, et dépend des actions décidées pour les (i-1)èmes branches. Par exemple, en supposant qu'on souhaite appliquer une contrainte de puissance d'émission maximale à chaque créneau temporel et pour chaque satellite S1, S2, S3. Si les décisions prises sur les (i-1)èmes premières branches conduisent pour un satellite S1, S2, S3 à saturer cette contrainte, alors il est possible d'appliquer un masque vectoriel binaire sur les branches suivantes afin de ne plus attribuer de sous-zones géographiques z1-1,...,z1-n1 ; z2-1,...,z2-n2 ; z3-1,...,z3-n3 à ce satellite S1, S2, S3 pour assurer le respect de la contrainte.

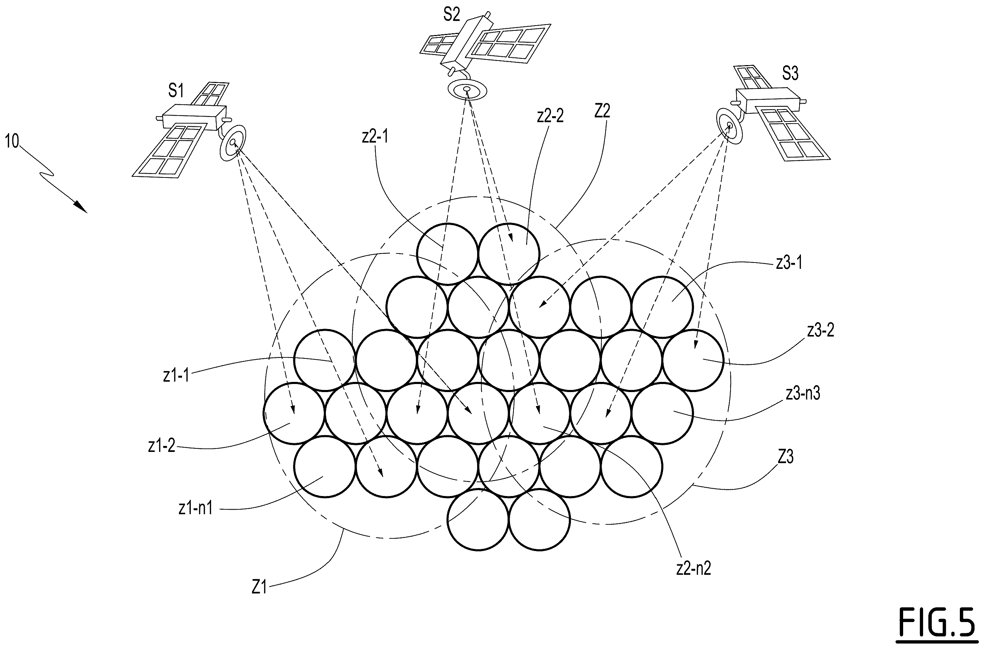

Lors d'une étape suivante 28 (illustrée sur la figure 5) de la phase itérative 20, le satellite S1 applique l'action d'allocation de ressources de communication temporelles et/ou fréquentielles qu'il vient de déterminer pour lui-même lors de l'étape précédente 26, pour l'horizon courant de k1 créneaux temporels. A l'issue de l'étape 28, l'étape 22 est remise en œuvre pour un nouvel horizon de k1 créneaux temporels.

On conçoit alors que le procédé d'allocation dynamique de ressources de communication temporelles et/ou fréquentielles selon l'invention présente un certain nombre d'avantages.

Il permet en effet de résoudre le problème d'optimisation de l'allocation des ressources avec une puissance de calcul modérée et des performances au sein du réseau maximisées, tout en palliant les inconvénients des approches centralisées et distribuées conventionnelles. Chaque satellite est en effet en mesure de déterminer sa propre action d'allocation de ressources de communication temporelles et/ou fréquentielles, ainsi que les actions des autres satellites, et ce sans que les actions d'allocation déterminées n'engendrent de collisions car les réseaux de neurones profonds sont identiques dans l'ensemble des satellites. Une telle approche permet ainsi de pallier les inconvénients des approches centralisées et distribuées conventionnelles, et peut être qualifiée de semi-distribuée. Le procédé selon l'invention permet également d'allouer toutes sortes de ressources de communication temporelles et/ou fréquentielles, ainsi que de résoudre le problème des communications requises pour la prise de décision. Il permet en outre de faciliter la transmission de signalisation entre les satellites, ce qui permet de minimiser la quantité de données transmises.

Dans d'autres alternatives, S1, S2, S3 sont des satellites qui fonctionnent en mode régénératif et/ou des satellites qui fonctionnent en mode transparent. Les messages X2(LTE)/Xn(5G) ou autre évolution entre les satellites (ou les SANs pour « Satellite Access Nodes » en anglais) peuvent être des messages similaires TS 36.423/TS 38.423 comme par exemple X2/Xn « SETUP REQUEST » suivi par X2/Xn « SETUP RESPONSE », xNB « CONFIGURATION UPDATE »/xNB « CONFIGURATION UPDATE ACKNOWLEDGE / FAILURE », « MOBILITY CHANGE REQUEST » suivi par « MOBILITY CHANGE ACKNOWLEDGE/FAILURE », « HANDOVER REQUEST » suivi par « HANDOVER ACKNOWLEDGE/FAILURE/HANDOVER SUCCESS » ou autre similaire, « EARLY STATUS TRANSFER » ou « UE Context Information IE ». Les messages entre les satellites (ou les SANs pour « Satellite Access Nodes » en anglais) et les MME/AMF (i.e. les interfaces eNB-MME or gNB-AMF) peuvent être des protocoles ou des messages similaires comme par exemple S1-C/S1-AP (TS 36.413, pour LTE), N2/NGAP (TS 38.413 pour la 5G), comme par exemple S1/NG « SETUP REQUEST » suivi par S1/NG « SETUP RESPONSE », MME/AMF « CONFIGURATION UPDATE » suivi par MME/AMF « CONFIGURATION UPDATE ACKNOWLEDGE », ENB/RAN « CONFIGURATION UPDATE » suivi par ENB/RAN « CONFIGURATION UPDATE ACKNOWLEDGE », « (INITIAL) CONTEXT SETUP REQUEST » suivi par « (INITIAL) CONTEXT SETUP RESPONSE », « Connection Setup », « Context Management » (de type « Setup/Modification/Release »), « Mobility Information », Downlink/Uplink eNB/RAN/MME/AMF « Status/Configuration Transfer ».

Dans une autre alternative, une fois que les fonctions de distribution cumulative CDF et de densité de probabilité PDF sont calculées, la transmission s'effectue sur N points d'une manière compressée pour diminuer le débit nécessaire pour la transmission des informations (i.e. l'entité CMNF/LMF/e-SMLC et/ou les autres satellites S1, S2, S3 pourraient interpoler les N valeurs pour retrouver la courbe exacte). Dans le but de faciliter cette tâche, dans le message de requête « REQUEST » (e.g. d'un satellite Sx vers un satellite Sy) on peut aussi ajouter le nombre de points N que le satellite va utiliser pour faire la réponse « RESPONSE » (e.g. d'un satellite Sy vers un satellite Sx).

La présente description est applicable pour des réseaux d'accès satellite seulement ou satellite et terrestre ou pour un maillage satellite et terrestre en mode de transmission FDD et/ou TDD, pour des procédures d'accès/allocation de ressources en liaison descendante ou en liaison montante ou les deux, pour des solutions multi-orbite NGSO & GSO: UAV & HAPS, VLEO, LEO, MEO, GEO, etc.

Bien que la présente invention a été décrite en référence à un réseau de communication non terrestre 10 comprenant trois satellites S1, S2, S3, il est entendu qu'elle s'applique de la même manière à tout réseau de communication non terrestre comprenant un nombre de satellites supérieur ou égal à deux, et différent de trois.

## Revendications

1. Procédé d'allocation dynamique de ressources de communication temporelles et/ou fréquentielles entre une pluralité de satellites (S1, S2, S3) dans un réseau de communication non terrestre (10), chaque satellite (S1, S2, S3) couvrant une zone géographique prédéfinie (Z1, Z2, Z3), chaque zone géographique (Z1, Z2, Z3) couverte par un satellite (S1, S2, S3) étant subdivisée en sous-zones géographiques (z1-1,...,z1-n1 ; z2-1,...,z2-n2 ; z3-1,...,z3-n3) de plus petites tailles, chacune desdites sous-zones géographiques (z1-1,...,z1-n1 ; z2-1,...,z2-n2 ; z3-1,...,z3-n3) contenant un nombre donné d'équipements utilisateurs, chaque équipement utilisateur étant destiné à établir une communication avec un satellite (S1, S2, S3), les zones géographiques (Z1, Z2, Z3) couvertes par la pluralité de satellites (S1, S2, S3) présentant des zones de recouvrement et des zones de couverture exclusive, chaque satellite (S1, S2, S3) étant muni d'un système informatique comprenant un réseau de neurones profond entrainé par un apprentissage par renforcement, chaque réseau de neurones profond recevant comme entrées l'ensemble des états des différents satellites (S1, S2, S3) du réseau de communication non terrestre (10) à un instant courant, et étant configuré pour fournir en sortie une action d'allocation de ressources de communication temporelles et/ou fréquentielles pour chacun desdits satellites (S1, S2, S3), les réseaux de neurones profonds étant identiques dans l'ensemble des satellites (S1, S2, S3) du réseau de communication non terrestre (10),
le procédé comprenant les étapes itératives suivantes, mises en oeuvre par chacun des satellites (S1, S2, S3) sur un horizon de créneaux temporels prédéfini :
- réception (22) de données relatives aux équipements utilisateurs contenus dans les sous-zones géographiques (z1-1,...,z1-n1 ; z2-1,...,z2-n2 ; z3-1,...,z3-n3) de la zone géographique (Z1, Z2, Z3) couverte par ledit satellite (S1, S2, S3) ;
- envoi (24) desdites données reçues à au moins un autre satellite (S1, S2, S3) parmi la pluralité de satellites (S1, S2, S3) du réseau de communication non terrestre (10) ;
- détermination (26) d'une action d'allocation de ressources de communication temporelles et/ou fréquentielles pour chaque satellite (S1, S2, S3) de la pluralité de satellites (S1, S2, S3) du réseau de communication non terrestre (10), pour ledit horizon de créneaux temporels ;
- application (28) de l'action d'allocation de ressources de communication temporelles et/ou fréquentielles déterminée pour ledit satellite (S1, S2, S3), pour ledit horizon de créneaux temporels.

2. Procédé d'allocation dynamique de ressources de communication temporelles et/ou fréquentielles selon la revendication 1, dans lequel chacun des équipements utilisateurs est un nœud radio.

3. Procédé d'allocation dynamique de ressources de communication temporelles et/ou fréquentielles selon la revendication 1 ou 2, dans lequel lors de l'étape (22) de réception de données, les données relatives aux équipements utilisateurs contenus dans les sous-zones géographiques (z1-1,...,z1-n1 ; z2-1,...,z2-n2 ; z3-1,...,z3-n3) de la zone géographique (Z1, Z2, Z3) couverte par ledit satellite (S1, S2, S3) comprennent des données relatives à une position des équipements utilisateurs dans chaque sous-zone géographique (z1-1,...,z1-n1 ; z2-1,...,z2-n2 ; z3-1,...,z3-n3) et/ou des données relatives à un besoin en communication de la part de chaque équipement utilisateur et/ou des données relatives à une perte par couplage en voie descendante et/ou en voie montante de chaque équipement utilisateur.

4. Procédé d'allocation dynamique de ressources de communication temporelles et/ou fréquentielles selon la revendication 3, dans lequel lors de l'étape (22) de réception de données, les données relatives aux équipements utilisateurs contenus dans les sous-zones géographiques (z1-1,...,z1-n1 ; z2-1,...,z2-n2 ; z3-1,...,z3-n3) de la zone géographique (Z1, Z2, Z3) couverte par ledit satellite (S1, S2, S3) comprennent en outre des données relatives à un rapport signal sur interférence et bruit en voie descendante et/ou en voie montante de chaque équipement utilisateur, et/ou des données relatives à la quantité d'énergie restant audit satellite (S1, S2, S3).

5. Procédé d'allocation dynamique de ressources de communication temporelles et/ou fréquentielles selon la revendication 3 ou 4, dans lequel lors de l'étape (24) d'envoi des données reçues, lorsque les données relatives aux équipements utilisateurs contenus dans les sous-zones géographiques (z1-1,...,z1-n1 ; z2-1,...,z2-n2 ; z3-1,...,z3-n3) de la zone géographique (Z1, Z2, Z3) couverte par ledit satellite (S1, S2, S3) comprennent des données relatives à une position des équipements utilisateurs dans chaque sous-zone géographique (z1-1,...,z1-n1 ; z2-1,...,z2-n2 ; z3-1,...,z3-n3), lesdites données de position sont envoyées sous la forme d'une fonction de distribution cumulative ou sous la forme d'une fonction de densité de probabilité.

6. Procédé d'allocation dynamique de ressources de communication temporelles et/ou fréquentielles selon l'une quelconque des revendications 3 à 5, dans lequel lors de l'étape (24) d'envoi des données reçues, lorsque les données relatives aux équipements utilisateurs contenus dans les sous-zones géographiques (z1-1,...,z1-n1 ; z2-1,...,z2-n2 ; z3-1,...,z3-n3) de la zone géographique (Z1, Z2, Z3) couverte par ledit satellite (S1, S2, S3) comprennent des données relatives à une position des équipements utilisateurs dans chaque sous-zone géographique (z1-1,...,z1-n1 ; z2-1,...,z2-n2 ; z3-1,...,z3-n3), l'étape (24) d'envoi desdites données est effectuée en encodant, pour chacune des sous-zones géographiques (z1-1,...,z1-n1 ; z2-1,...,z2-n2 ; z3-1,...,z3-n3), les coordonnées de chaque équipement utilisateur contenu dans ladite sous-zone géographique (z1-1,...,z1-n1 ; z2-1,...,z2-n2 ; z3-1,...,z3-n3)sur un nombre prédéfini de bits ; ou en subdivisant chaque sous-zone géographique (z1-1,...,z1-n1 ; z2-1,...,z2-n2 ; z3-1,...,z3-n3)en un ensemble de sous-régions géographiques puis en envoyant, pour chaque sous-région géographique d'une sous-zone géographique (z1-1,...,z1-n1 ; z2-1,...,z2-n2 ; z3-1,...,z3-n3) donnée, le nombre d'équipements utilisateurs contenus dans ladite sous-région géographique.

7. Procédé d'allocation dynamique de ressources de communication temporelles et/ou fréquentielles selon l'une quelconque des revendications 1 à 4, dans lequel l'étape (24) d'envoi des données reçues consiste en un envoi, pour chaque sous-zone géographique (z1-1,...,z1-n1 ; z2-1,...,z2-n2 ; z3-1,...,z3-n3) de la zone géographique (Z1, Z2, Z3) couverte par le satellite (S1, S2, S3), d'au moins une fonction de répartition ou d'au moins un histogramme de ces données sur un nombre prédéfini de points et sur un intervalle prédéfini.

8. Procédé d'allocation dynamique de ressources de communication temporelles et/ou fréquentielles selon la revendication 7 lorsqu'elle dépend de la revendication 3, dans lequel, lorsque les données relatives aux équipements utilisateurs contenus dans les sous-zones géographiques (z1-1,...,z1-n1 ; z2-1,...,z2-n2 ; z3-1,...,z3-n3) de la zone géographique (Z1, Z2, Z3) couverte par ledit satellite (S1, S2, S3) comprennent des données relatives à une perte par couplage en voie descendante et/ou en voie montante de chaque équipement utilisateur, l'étape (24) d'envoi desdites données est effectuée en encodant, pour chacune des sous-zones géographiques (z1-1,...,z1-n1 ; z2-1,...,z2-n2 ; z3-1,...,z3-n3), la perte par couplage en voie descendante et/ou en voie montante de chaque équipement utilisateur contenu dans ladite sous-zone géographique (z1-1,...,z1-n1 ; z2-1,...,z2-n2 ; z3-1,...,z3-n3) sur un nombre prédéfini de bits ; ou en effectuant un échantillonnage des valeurs de perte par couplage en voie descendante et/ou en voie montante des équipements utilisateurs contenus dans chaque sous-zone géographique (z1-1,...,z1-n1 ; z2-1,...,z2-n2 ; z3-1,...,z3-n3) entre une valeur minimale de perte par couplage et une valeur maximale de perte par couplage sur ledit nombre prédéfini de points puis en envoyant, pour chaque sous-zone géographique (z1-1,...,z1-n1 ; z2-1,...,z2-n2 ; z3-1,...,z3-n3), lesdites valeurs échantillonnées.

9. Procédé d'allocation dynamique de ressources de communication temporelles et/ou fréquentielles selon l'une quelconque des revendications 1 à 8, dans lequel, lors de l'étape (24) d'envoi des données reçues, lesdites données sont envoyées à tous les autres satellites (S1, S2, S3) de la pluralité de satellites (S1, S2, S3) du réseau de communication non terrestre (10) dans un mode de diffusion générale.

10. Procédé d'allocation dynamique de ressources de communication temporelles et/ou fréquentielles selon l'une quelconque des revendications 1 à 8, dans lequel, lors de l'étape (24) d'envoi des données reçues, lesdites données sont envoyées à un seul autre satellite de la pluralité de satellites (S1, S2, S3) du réseau de communication non terrestre (10) dans un mode de diffusion individuelle.

11. Procédé d'allocation dynamique de ressources de communication temporelles et/ou fréquentielles selon la revendication 10, dans lequel ledit un seul autre satellite est un satellite qui n'a pas déjà reçu des données relatives à des équipements utilisateurs en provenance d'un autre satellite, et dans lequel l'étape (24) d'envoi des données reçues comprend une sous-étape d'agrégation desdites données reçues à des données en provenance d'un autre satellite et relatives à des équipements utilisateurs couvert(s) par un ou plusieurs autre(s) satellite(s).

12. Procédé d'allocation dynamique de ressources de communication temporelles et/ou fréquentielles selon l'une quelconque des revendications 1 à 11, dans lequel chaque réseau de neurones profond est configuré comme un réseau de neurones à ramifications d'actions.

13. Procédé d'allocation dynamique de ressources de communication temporelles et/ou fréquentielles selon la revendication 12, dans lequel chaque branche du réseau de neurones à ramifications d'actions indique, pour un des créneaux temporels de l'horizon et pour une sous-zone géographique (z1-1,...,z1-n1 ; z2-1,...,z2-n2 ; z3-1,...,z3-n3) donnée, un satellite (S1, S2, S3) attribué aux équipements utilisateurs de ladite sous-zone géographique (z1-1,...,z1-n1 ; z2-1,...,z2-n2 ; z3-1,...,z3-n3) ainsi qu'une puissance d'émission à utiliser et/ou une fréquence porteuse de signal.

14. Procédé d'allocation dynamique de ressources de communication temporelles et/ou fréquentielles selon la revendication 12 ou 13, dans lequel l'étape (26) de détermination d'une action d'allocation de ressources de communication temporelles et/ou fréquentielles pour chaque satellite (S1, S2, S3) de la pluralité de satellites (S1, S2, S3) du réseau de communication non terrestre (10) comprend en outre une sous-étape (262) d'application, par le système informatique (16), d'un masque vectoriel binaire sur tout ou partie des branches du réseau de neurones à ramifications d'actions.

15. Procédé d'allocation dynamique de ressources de communication temporelles et/ou fréquentielles selon l'une quelconque des revendications 12 à 14, dans lequel le système informatique de chaque satellite (S1, S2, S3) comprend en outre un deuxième réseau de neurones profond entrainé par un apprentissage par renforcement, le deuxième réseau de neurones profond étant configuré comme un encodeur, le premier réseau de neurones à ramifications d'actions étant agencé en sortie dudit deuxième réseau de neurones.

16. Procédé d'allocation dynamique de ressources de communication temporelles et/ou fréquentielles selon la revendication 15, dans lequel ledit deuxième réseau de neurones profond présente une propriété d'équivariance par permutation sur ses entrées.

17. Procédé d'allocation dynamique de ressources de communication temporelles et/ou fréquentielles selon l'une quelconque des revendications 1 à 16, dans lequel chaque réseau de neurones profond est configuré en outre en fonction de conditions météorologiques et/ou atmosphériques distinctes, et/ou en fonction de profils de trafics de communications distincts.

18. Procédé d'allocation dynamique de ressources de communication temporelles et/ou fréquentielles selon l'une quelconque des revendications 1 à 17, dans lequel l'étape (24) d'envoi des données reçues est effectuée selon un protocole de communication conforme à la norme 4G/5G, les données étant envoyées dans des messages respectant une interface de communication X2/Xn et/ou E-UTRAN/NG-RAN et/ou S1/NG et/ou **F1-**AP/F1-C et/ou FAPI/nFAPI de ladite norme 4G/5G.

19. Réseau de communication non terrestre (10) comprenant une pluralité de satellites (S1, S2, S3), chaque satellite (S1, S2, S3) couvrant une zone géographique prédéfinie (Z1, Z2, Z3), chaque zone géographique (Z1, Z2, Z3) couverte par un satellite (S1, S2, S3) étant subdivisée en sous-zones géographiques (z1-1,...,z1-n1 ; z2-1,...,z2-n2 ; z3-1,...,z3-n3) de plus petites tailles, chacune desdites sous-zones géographiques (z1-1,...,z1-n1 ; z2-1,...,z2-n2 ; z3-1,...,z3-n3) contenant un nombre prédéfini d'équipements utilisateurs, chaque équipement utilisateur étant destiné à établir une communication avec un satellite (S1, S2, S3), les zones géographiques (Z1, Z2, Z3) couvertes par la pluralité de satellites (S1, S2, S3) présentant des zones de recouvrement et des zones de couverture exclusive, chaque satellite (S1, S2, S3) étant muni d'un système informatique comprenant un réseau de neurones profond entrainé par un apprentissage par renforcement, chaque réseau de neurones profond recevant comme entrées l'ensemble des états des différents satellites (S1, S2, S3) du réseau de communication non terrestre (10) à un instant courant, et étant configuré pour fournir en sortie une action d'allocation de ressources de communication temporelles et/ou fréquentielles pour chacun desdits satellites (S1, S2, S3), les réseaux de neurones profonds étant identiques dans l'ensemble des satellites (S1, S2, S3) du réseau de communication non terrestre (10), dans lequel chacun des satellites (S1, S2, S3) est configuré pour mettre en oeuvre les étapes du procédé selon l'une quelconque des revendications 1 à 18.

20. Réseau de communication non terrestre (10) selon la revendication 19, dans lequel le système informatique de chaque satellite (S1, S2, S3) dispose d'une part d'une capacité de calcul d'une fonction de distribution cumulative et/ou d'une fonction de densité de probabilité, et d'autre part d'une capacité d'estimation de perte par couplage et/ou de rapport signal/interférence plus bruit par équipement utilisateur et/ou par faisceau ou sous-zone géographique.
